(19) Europäisches Patentamt
European Patent Office
Office européen des brevets

(11) Publication number: **0 516 933 B1**

(12) **EUROPEAN PATENT SPECIFICATION**

(45) Date of publication of patent specification: **17.05.95**

(51) Int. Cl.[6]: **C01B 21/14**

(21) Application number: **92105457.3**

(22) Date of filing: **30.03.92**

(54) **Stabilization of aqueous hydroxylamine solutions.**

(30) Priority: **23.05.91 US 704479**
**23.05.91 US 704475**

(43) Date of publication of application:
**09.12.92 Bulletin 92/50**

(45) Publication of the grant of the patent:
**17.05.95 Bulletin 95/20**

(84) Designated Contracting States:
**AT BE CH DE DK ES FR GB GR IT LI LU NL PT SE**

(56) References cited:
**EP-A- 0 164 471**

**PATENT ABSTRACTS OF JAPAN vol. 6, no. 186 (C-126)(1064), 22 Sept. 1982; & JP-A-57100908 (NITSUSHIN KAKOU K.K.) 23.06.1982**

**PATENT ABSTRACTS OF JAPAN vol. 7, no. 161 (C-176)(1306), 15 July 1983; & JP-A-5869843 (NITSUSHIN KAKOU K.K.) 26.04.1983**

(73) Proprietor: **CYTEC TECHNOLOGY CORP.**
**1105 North Market Street,**
**Suite 1300**
**Wilmington,**
**Delaware 19801 (US)**

(72) Inventor: **Heitner, Howard Ivan**
**121 Litle Hill Drive**
**Stamford,**
**Connecticut 06905 (US)**

(74) Representative: **Diehl, Hermann O. Th., Dr.**
**Diehl & Glaeser, Hiltl & Partner**
**Patentanwälte**
**Postfach 19 03 65**
**D-80603 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 516 933 B1

## Description

Background of The Invention

Solutions of hydroxylamine are inherently unstable, decomposing by internal oxidation-reduction to form ammonia and nitrogen or nitrogen oxides. The decomposition is accelerated by high pH and the presence of catalytic amounts of cations such as Fe(II), Ni(II), and Cu(II). Aqueous solutions thereof are commonly produced by at least the partial neutralization of the hydroxylamine salt, such as the hydrochloride or sulfate, with an alkali metal hydroxide or ammonia. These solutions are widely used in synthesis work, but the instability of the free hydroxylamine in these solutions limits its utility in cases where storage is necessary.

There have been a number of attempts reported to stabilize solutions of an hydroxylamine or an at least partially neutralized hydroxylamine salt in order to achieve a longer shelf life. Compounds that have been reported to be stabilizers for such solutions include various chelating agents such as the tetrasodium salt of ethylene diaminetetraacetic acid (U.S. Patent No. 3145082); amide oximes (U.S. Patent No. 3480391); hydroxamic acids (U.S. Patent No. 3480392); hydroxyureas and hydroxythioureas (U.S. Patent No. 3544270); hydroxylalkylidene diphosphonic acids (U.S. Patent No. 3647449); vicinal polyhydroxyphenols (Japanese Patent No. 4878099); hydroxyquinolines (Japanese Patent No. 57/100908); 1,10-phenantholine (Japanese Patent No. 58/69841); dipyridyl compounds (Japanese Patent No. 58/69842); thiocarboxylic acids (Japanese Patent No. 58/69843); quinoline derivatives (Japanese Patent No. 58/69844); hydroxy substituted flavone (German Patent No. 33/43597); anthocyanins (U.S. Patent No. 4551318); hydroxyl substituted flavan (German Patent No. 3343599); stannic acid (Japanese Patent No. 60/260541); hydroxy substituted anthraquinones (U.S. Patent No. 4576804); 8-hydroxyquinalidines (U.S. Patent No. 4629613); and 2,3-dihydrohexano-1,4-lactone (U.S. Patent No. 4634584).

Summary of the Invention

The present invention provides stabilized solutions of an hydroxylamine or an at least partially neutralized hydroxylamine salt which are stable over a prolonged period, minimizing the decomposition of hydroxylamine. This is achieved by the addition of small amounts of a mercaptothiazole, a thiosulfate salt, a mercaptothiazoline, a thiuram disulfide, thiourea or a mercaptoalkanol.

Description of The Invention
Including Preferred Embodiments

The thiosulfate additives of the present invention are the water-soluble thiosulfates, e.g. the alkali metal thiosulfates, examples of which include sodium thiosulfate; potassium thiosulfate etc. ammonium thiosulfate; the alkaline earth metal thiosulfates such as calcium thiosulfate, magnesium thiosulfate; etc. The preferred thiosulfate is sodium thiosulfate.

The second class of additives of the present invention include compounds having the formula:

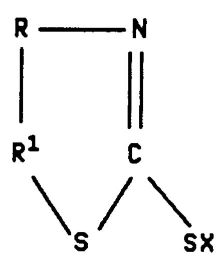

I

wherein R and $R^1$ are each $CHR^2$ groups or R and $R^1$ together form an aryl or cycloalkyl group, X is hydrogen or a monovalent cation, and each $R^2$ is, individually, hydrogen or an alkyl ($C_1$-$C_4$) group.

The 2-mercaptothiazoles useful in the present invention i.e. wherein R and $R^1$ above, form an aryl or cycloalkyl group are represented by the following formula:

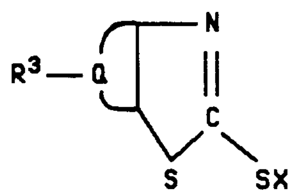

where $R^3$ represents a hydrogen atom or a lower hydrocarbon radical, X is as set forth above, and Q is aryl or cycloalkyl. Examples of suitable lower hydrocarbon radicals include $C_1$-$C_4$ alkyl, while such monovalent cations as sodium, potassium and ammonium are exemplary.

Exemplary compounds include 2-mercaptobenzothiazole; 2-mercaptocyclohexylthiazole; sodium 2-mercapto-4-methylbenzothiazole; potassium 2-mercapto-6-t-butyl-cyclohexylthiazole etc.

The 2-mercaptothiazolines useful in the present invention, as represented by Formula I, above, are;

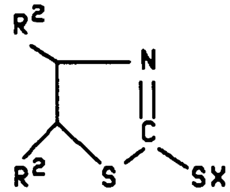

III

where $R^2$ and X are as set forth above.

Exemplary thiazolines include 2-mercapto-4,5-dimethylthiazoline; sodium 2-mercaptothiazoline; potassium 2-mercapto-5-t-butylthiazoline etc.

The third class of additives of the present invention include compounds having the formula:

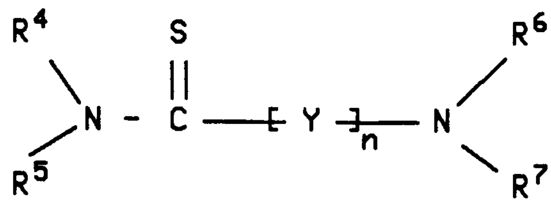

IV

wherein $R^4$, $R^5$, $R^6$ and $R^7$ are, individually, hydrogen, a $C_1$-$C_{10}$ alkyl group or an aryl group, Y is a

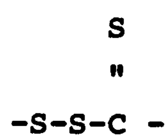

group and n is 0 or 1.

The thiuram disulfides useful in the present invention are those of Formula IV, above, where n is 1, and are represented by the formula:

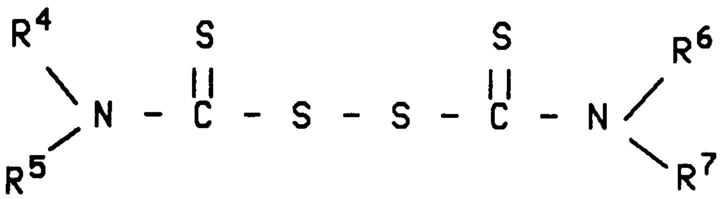

V

where $R^4$, $R^5$, $R^6$, and $R^7$ are as indicated above, most preferably hydrogen. When alkyl, $R^4$-$R^7$ are preferably $C_1$-$C_4$ alkyl radicals such as methyl, ethyl, n-butyl, t-butyl etc.

Tetramethylthiuram disulfide; tetra-n-butylthiuram disulfide; N,N'-diethylthiuram disulfide; tetraphenylthiuram disulfide; thiuramdisulfide and the like are representative compounds.

The thioureas of the present invention are those of Formula IV, above, where n is 0, and are represented by the formula:

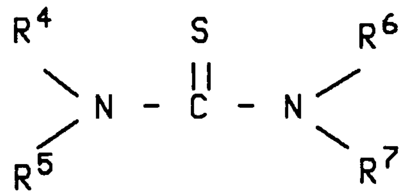

VI

where $R^4$-$R^7$ are as indicated above, preferably hydrogen. Examples are thiourea, N,N'-diphenyl thiourea, diortho-tolyl thiourea, ethylene thiourea, and the like.

The fourth class of additives useful in the present invention are the mercaptoalkanols represented by the formula:

$$(HS)_a - R^8 - (OH)_b \qquad VII$$

where $R^8$ represents a polyvalent alkylene radical containing 2 to 20 carbon atoms and a and b are integers of 1 to 3, the sum of a and b not exceeding 4. Examples of suitable compounds include 2-mercaptoethanol, 2-mercaptopropanol, 2,11-dimercapto-1,12-dodecanediol, and the like.

The amount of stabilizer to be used to stabilize the hydroxylamine or the at least partially neutralized hydroxylamine salt solution ranges from about 0.001 to about 100 mole %, based on the hydroxylamine salt. Preferably, the amount of stabilizer ranges from about 0.1 to about 10 mole %, same basis. The aqueous solutions of free hydroxylamine i.e. fully neutralized salt, can be produced by the reaction of a salt of hydroxylamine (such as the hydrochloride, the nitrate, the acetate, the sulfate salt etc.) with an alkali metal hydroxide (such as sodium hydroxide) or with ammonia. The concentration of the hydroxylamine or the at least partially neutralized hydroxylamine salt is usually at least about 1 weight percent of the aqueous solution and can range up to saturation or more, but is generally from about 3 to about 30, weight percent. It is best to add the stabilizer to the hydroxylamine salt solution before its neutralization with base, but the stabilizer can also be added to the at least partially neutralized hydroxylamine salt solution. The temperature during the stabilizer addition is advantageously kept at from about 5°C to about 40°C. The stabilized solutions should be stored at temperatures $<40°C$, preferably $<25°C$.

The decomposition of the hydroxylamine in aqueous solutions is quite rapid at above pH 7.0 i.e. in the presence of excess base providing immediate evolution of the gaseous by-products. It is convenient to test the ability of a compound to stabilize the hydroxylamine solution by monitoring the amount of gas evolved with time. The stabilized solutions are useful in the preparation of hydroxamated polymers e.g. acrylamide polymers.

The following examples are set forth for purposes of illustration only and are not to be construed as limitations on the present invention except as set forth in the appended claims. All parts and percentages are by weight unless otherwise specified.

Example 1
(Comparative)

A suitable reaction vessel is equipped with a thermometer, a pressure equalizing addition funnel, a stirring bar and a gas outlet which is connected to an inverted graduated cylinder filled with water. Into the vessel are charged 39.3 parts (0.144 mole) of 30% aqueous hydroxylamine sulfate solution. While maintaining the temperature below 25°C, 23.0 parts (0.288 mole) of 50% aqueous sodium hydroxide solution are added. The vessel is tightly sealed. Vigorous gas evolution is observed and the water is displaced from the graduated cylinder. 920 Ml of gas are evolved over a period of 4.5 hours. The gas is identified by its infrared absorption spectrum as being mainly nitrous oxide, indictating the decomposition of the hydroxylamine.

Example 2

The procedure of Example 1 is repeated except that 0.23 part of sodium thiosulfate (0.00145 mole) is added to the hydroxylamine sulfate solution before the addition of the sodium hydroxide. No measurable gas (<10 ml) is collected in the cylinder after 16 hours indicating that the hydroxylamine is stabilized.

Example 3

The procedure of Example 1 is repeated except that 1 mole percent of thiourea is added to the hydroxylamine sulfate solution before the addition of the sodium hydroxide. No measurable gas is collected in the cylinder after 16 hours indicating that the hydroxylamine is stabilized.

Example 4

Using the same apparatus as in Example 1, 39.3 parts (0.144 mole) of 30% aqueous hydroxylamine sulfate solution are treated with 23.0 parts (0.288 mole) of 50% aqueous sodium hydroxide in the presence of 1 mole % of various stabilizer compounds and the gas evolution is monitored with time. The results are reported in Table I, below.

Table I

| Hydroxylamine Stabilization Studies Gas Collection Over Time | | |
|---|---|---|
| Stabilizer Added | ml Gas | Time (Hr.) |
| None | 880 | 4.0 |
| None | 970 | 4.5 |
| Sodium thiosulfate | 10 | 23.3 |
| 2-Mercaptobenzothiazole | 30 | 18.2 |
| 2-Mercaptobenezothiazole | 120 | 24.3 |
| Tetramethylthiuram Disulfide | 80 | 22.8 |
| Tetramethylthiuram Disulfide | 0 | 45.0 |
| 8-Quinolinol | 500 | 5.5 |
| 8-Quinolinol | 530 | 7.8 |
| 2-Mercaptothiazoline | 20 | 17.7 |
| 2-Mercaptothiazoline | 310 | 22.5 |
| 2-Mercaptothiazoline | 210 | 25.0 |
| 2-Mercaptothiazoline | 320 | 18.5 |
| 2-Mercaptothiazoline | 30 | 24.5 |
| 2-Mercaptothiazoline | 40 | 23.4 |
| 2-Mercaptobenzimidazole | 690 | 4.7 |
| 2-Mercaptobenzimidazole | 620 | 7.0 |
| 2-Mercaptobenzimidazole | 590 | 7.0 |
| Sodium Diethyl Dithiocarbamate | 600 | 18.2 |
| Thiourea | 0 | 24.0 |
| Sodium Diethyl Dithiophosphate | 220 | 23.0 |
| Sodium Diethyl Dithiophosphate | 670 | 71.0 |
| Sodium Diethyl Dithiophosphate | 560 | 4.0 |
| 2-Mercaptoethanol | 170 | 23.0 |
| Tolylbiguanide | 900 | 7.3 |
| Sodium Hydrosulfide | 890 | 6.5 |
| Sodium Hypophosphite | 850 | 21.0 |
| Sodium Metabisulfite | 870 | 5.0 |
| Hydroquinone | 690 | 23.0 |

Examples 5-8

The procedure of Example 2 is again followed except that the sodium thiosulfate is replaced by an equivalent amount of 5) potassium thiosulfate, 6) ammonium thiosulfate, 7) calcium thiosulfate and 8) magnesium thiosulfate. In each instance, no measurable amount of gas is collected after 14 hours.

Examples 9-17

Following the procedure of Example 3, various other stabilizers falling within the structural formulae I-VII, above, are employed in lieu of the thiourea. In each instance, gas evolution over 24 hours is reduced significantly when the stabilizer is added as compared to the hydroxylamine solution in the absence of stabilizer. The stabilizers are shown in Table II, below.

Table II

| Example | Formula No. | Q | $R^2$ | $R^3$ | $R^4$ | $R^5$ | $R^6$ | $R^7$ | $R^8$ | X | a | b |
|---|---|---|---|---|---|---|---|---|---|---|---|---|
| 9 | II | benzyl | - | ethyl | - | - | - | - | - | K | - | - |
| 10 | II | cyclo- | - | t-butyl | - | - | - | - | - | Na | - | - |
| 11 | III | hexyl- | methyl | - | - | - | - | - | - | $NH_4$ | - | - |
| 12 | III | - | n-propyl | - | - | - | - | - | - | K | - | - |
| 13 | V | - | - | - | t-butyl | t-butyl | t-butyl | t-butyl | - | - | - | - |
| 14 | VI | - | - | - | phenyl | H | phenyl | H | - | - | - | - |
| 15 | VI | - | - | - | o-tolyl | H | o-tolyl | H | - | - | - | - |
| 16 | VII | - | - | - | - | - | - | - | propyl | - | 1(2) | 1 |
| 17 | VII | - | - | - | - | - | - | - | dodecyl | - | 2(2,11) | 2(1,12) |

## Claims

1. A stabilized solution containing an hydroxylamine or an at least partially neutralized hydroxylamine salt in water and an effective stabilizing amount of a compound selected from a water-soluble, alkali metal,

alkaline earth metal or ammonium thiosulfate and the group consisting of those having the formula:

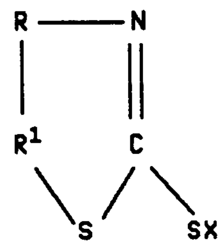

I

wherein R and $R^1$ are each $CHR_2$ groups or together form a substituted or unsubstituted aryl or cylcoalkyl group, X is hydrogen or a monovalent cation and each $R^2$ group is, individually, a $C_1$-$C_4$ alkyl group or hydrogen; or

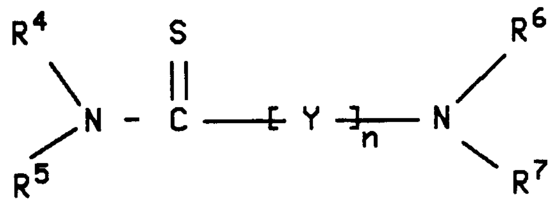

IV

wherein $R^4$, $R^5$, $R^6$ and $R^7$ are, individually, hydrogen, a $C_1$-$C_{10}$ alkyl group or an aryl group, Y is a

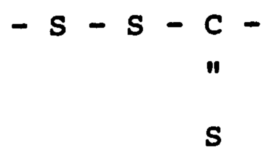

group and n is is 0 or 1; or

$(HS)_a$ - $R^8$ - $(OH)_b$ VII

wherein $R^8$ is a polvalent alkylene radical of 2-20 carbon atoms and a and b are integers of 1-3, inclusive, the sum of a and b not exceeding 4.

2. The stabilized solution of Claim 1 wherein said compound is represented by the formula:

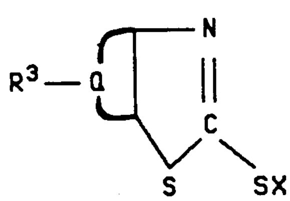

where $R^3$ represents a hydrogen atom or a lower hydrocarbon radical, X is as defined therein and Q is aryl or cycloalkyl.

3. The solution of Claim 1 wherein the thiosulfate is sodium thiosulfate.

4. The stabilized solution of Claim 1 wherein said compound is represented by the formula:

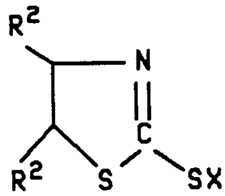

III

where $R^2$ and X are as set forth therein.

5. The stabilized solution of Claim 1 wherein said compound is represented by the formula:

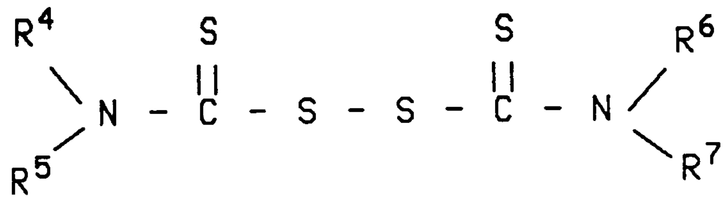

V

where $R^4$, $R^5$, $R^6$, and $R^7$ are as set forth therein.

6. The stabilized solution of Claim 1 wherein the compound is represented by the formula:

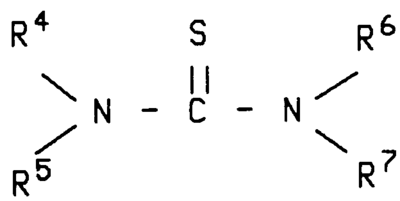

VI

wherein $R^4$-$R^7$ are as designated therein.

7. The stabilized solution of Claim 1 wherein said compound is represented by the formula:

$(HS)_a - R^8 - (OH)_b$ VII

where $R^8$, a and b are as represented therein.

8. A process for inhibiting the decomposition of an hydroxylamine or an aqueous solution of at least a partially neutralized hydroxylamine salt which comprises adding to said solution a stabilizing amount of a water-soluble, alkali metal, alkaline earth metal or ammonium thiosulfate or a compound having the formula:

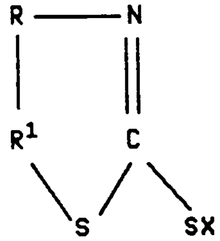

I

wherein R and $R^1$ are each $CHR^2$ groups or together form a substituted or unsubstituted aryl or

cycloalkyl group, X is hydrogen or a monovalent cation and each $R^2$ group is a $C_1$-$C_4$ alkyl group or hydrogen; or

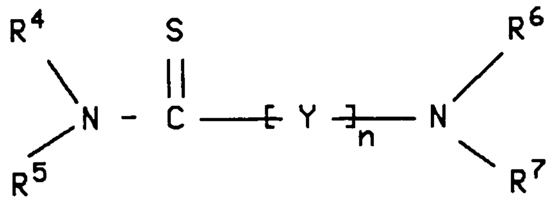

IV

wherein $R^4$ $R^5$, $R^6$ and $R^7$ are, individually, hydrogen, a $C_1$-$C_{10}$ alkyl group or an aryl group, Y is a

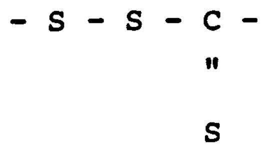

group and n is is 0 or 1; or

$(HS)_a$ - $R^8$ - $(OH)_b$ VII

wherein $R^8$ is a polvalent alkylene radical of 2-20 carbon atoms and a and b are integers of 1-3, inclusive, the sum of a and b not exceeding 4.

**9.** The process of Claim 8 wherein the compound is represented by formula:

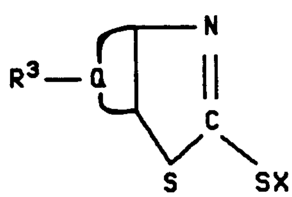

where $R^3$ represents a hydrogen atom or a lower hydrocarbon radical, X is as defined therein and Q is aryl or cycloalkyl.

**10.** A process according to Claim 8 wherein said compound is represented by the formula:

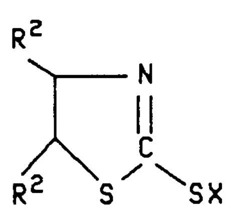

III

where X and $R^2$ are as represented therein.

**11.** A process according to Claim 8 wherein said compound is represented by the formula:

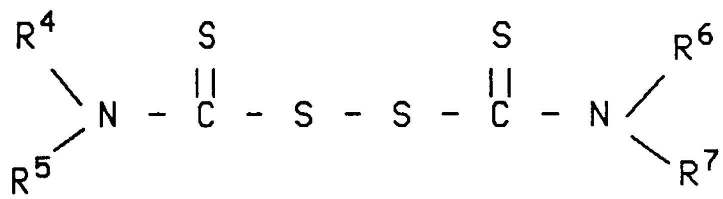

V

where $R^4$, $R^5$, $R^6$ and $R^7$ are as set forth therein.

**12.** A process according to Claim 8 wherein said compound is represented by the formula:

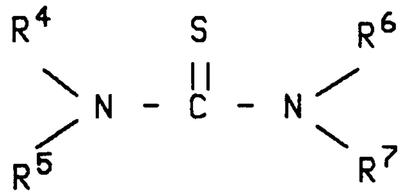

VI

where $R^4$, $R^5$, $R^6$, and $R^7$ are as designated therein.

**13.** A process according to Claim 8 wherein the compound is represented by the formula:

$(HS)_a - R^8 - (OH)_b$ VII

where $R^8$, a and b are as represented therein.

**14.** The process of claim 8 wherein the thiosulfate is sodium thiosulfate.

**Patentansprüche**

**1.** Stabilisierte Lösung, die folgendes beinhaltet: ein Hydroxylamin oder ein zumindest teilweise in Wasser neutralisiertes Hydroxylaminsalz und eine wirksame stabilisierende Menge einer Verbindung, welche aus einem wasserlöslichen Alkalimetall, Erdalkalimetall oder Ammoniumthiosulfat und aus der Gruppe ausgewählt wurde, die aus jenen besteht, deren Formel

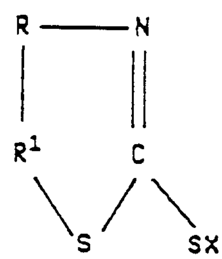

I

lautet, wobei R und $R^1$ jeweils $CHR_2$-Reste sind oder zusammen einen substituierten oder einen nichtsubstituierten Aryl- oder Zykloalkylrest bilden, X Wasserstoff oder ein einwertiges Kation ist und jeder einzelne $R^2$-Rest ein $C_1$-$C_4$ Alkylrest oder Wasserstoff ist, oder

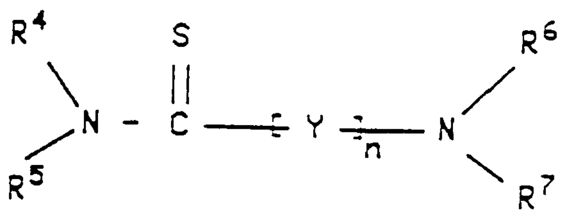

IV

wobei $R^4$, $R^5$, $R^6$ und $R^7$ jeweils Wasserstoff, ein $C_1$-$C_{10}$ Alkylrest oder ein Arylrest sind, Y eine

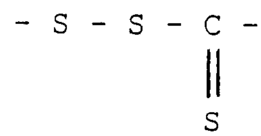

-Gruppe ist und n 0 oder 1 ist, oder

$(HS)_a$ - $R^8$ - $(OH)_b$ VII

wobei $R^8$ ein mehrwertiges Alkylenradikal mit 2-20 Kohlenstoffatomen ist und a und b ganze Zahlen von 1 bis einschließlich 3 sind, wobei die Summe von a und b 4 nicht überschreitet.

**2.** Stabilisierte Lösung nach Anspruch 1, wobei die Verbindung durch die Formel

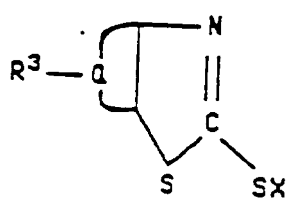

dargestellt ist, wobei $R^3$ ein Wasserstoffatom oder ein niedrigeres Kohlenwasserscoffradikal darstellt, X wie darin definiert ist und Q Aryl oder Zykloalkyl ist.

**3.** Lösung nach Anspruch 1, wobei das Thiosulfat Natriumthiosulfat ist.

**4.** Stabilisierte Lösung nach Anspruch 1, wobei die Verbindung durch die Formel

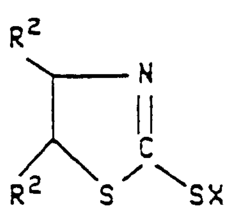

III

dargestellt ist, wobei $R^2$ und X die vorstehende Bedeutung haben.

**5.** Stabilisierte Lösung nach Anspruch 1, wobei die Verbindung durch die Formel

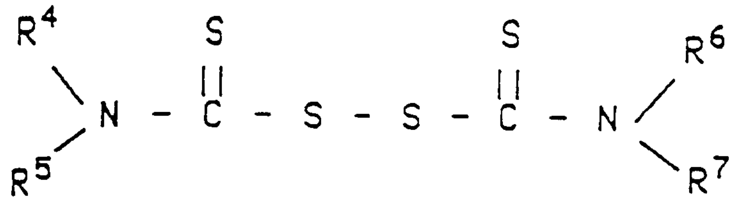

V

dargestellt ist, wobei $R^4$, $R^5$, $R^6$ und $R^7$ die vorstehende Bedeutung haben.

**6.** Stabilisierte Lösung nach Anspruch 1, wobei die Verbindung durch die Formel

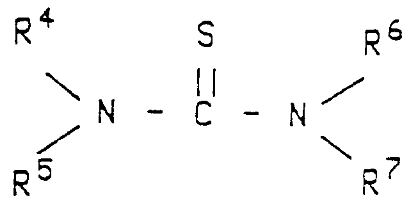

VI

dargestellt ist, wobei $R^4$ - $R^7$ die vorstehende Bedeutung haben.

**7.** Stabilisierte Lösung nach Anspruch 1, wobei die Verbindung durch die Formel

$(HS)_a$ - $R^8$ - $(OH)_b$   VII

dargestellt ist, wobei $R^8$, a und b die vorstehende Bedeutung haben.

**8.** Verfahren zur Unterbindung der Zersetzung eines Hydroxylamins oder einer wäßrigen Lösung eines zumindest teilweise neutralisierten Hydroxylaminsalzes, welches die Beigabe einer stabilisierenden Menge eines wasserlöslichen Alkalimetalls, Erdalkalimetalls oder Anmoniumthiosulfats oder einer Verbindung mit der Formel

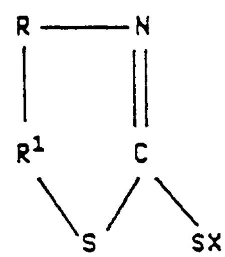

I

zur Lösung umfaßt, wobei R und $R^1$ jeweils $CHR^2$-Reste sind und zusammen einen substituierten oder nichtsubstituierten Aryl- oder Zykloalkylrest bilden, X Wasserstoff oder ein einwertiges Kation ist und jeder $R^2$-Rest ein $C_1$-$C_4$ Alkylrest oder Wasserstoff ist, oder

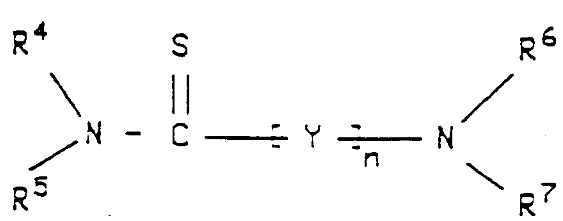

IV

wobei $R^4$, $R^5$, $R^6$ und $R^7$ jeweils Wasserstoff, ein $C_1$-$C_{10}$ Alkylrest oder ein Arylrest sind, Y eine

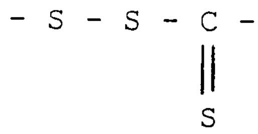

-Gruppe ist und n 0 oder 1 ist, oder

$(HS)_a - R^8 - (OH)_b$ VII

wobei $R^8$ ein mehrwertiges Alkylenradikal mit 2-20 Kohlenstoffatomen ist und a und b die ganzen Zahlen 1 bis einschließlich 3 darstellen, wobei die Summe von a und b 4 nicht überschreitet.

**9.** Verfahren nach Anspruch 8, wobei die Verbindung durch die Formel

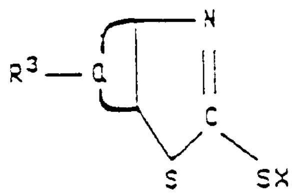

dargestellt ist, wobei $R^3$ ein Wasserstoffatom oder ein niedrigeres Kohlenwasserstoffradikal darstellt, X die vorstehende Bedeutung hat und Q Aryl oder Zykloalkyl ist.

**10.** Verfahren nach Anspruch 8, wobei die Verbindung durch die Formel

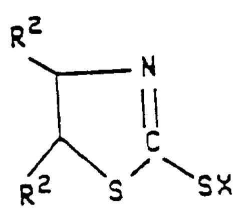

III

dargestellt ist, wobei X und $R^2$ die vorstehende Bedeutung haben.

**11.** Verfahren nach Anspruch 8, wobei die Verbindung durch die Formel

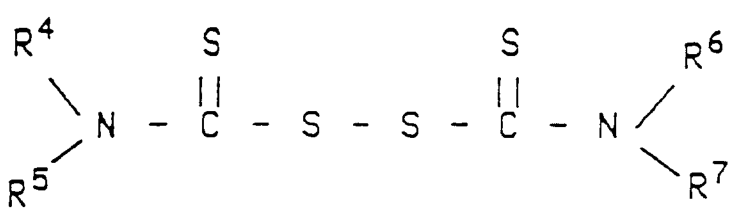

V

dargestellt ist, wobei $R^4$, $R^5$, $R^6$ und $R^7$ die vorstehende Bedeutung haben.

**12.** Verfahren nach Anspruch 8, wobei die Verbindung durch die Formel

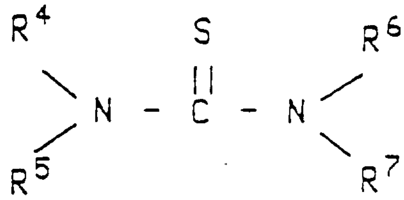 VI

dargestellt ist, wobei $R^4$, $R^5$, $R^6$ und $R^7$ die vorstehende Bedeutung haben.

**13.** Verfahren nach Anspruch 8, wobei die Verbindung durch die Formel

$(HS)_a$ - $R^8$ - $(OH)_b$ VII

dargestellt ist, wobei $R^8$, a und b die vorstehende Bedeutung haben.

**14.** Verfahren nach Anspruch 8, wobei das Thiosulfat Natriumthiosulfat ist.

## Revendications

**1.** Solution stabilisée contenant une hydroxylamine, ou un sel d'hydroxylamine au moins partiellement neutralisé, dans de l'eau et une quantité stabilisante efficace d'un composé choisi parmi un thiosulfate hydrosoluble de métal alcalin, de métal alcalino-terreux ou d'ammonium et dans le groupe constitué par ceux de formule:

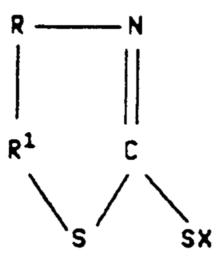 I

dans laquelle R et $R^1$ sont chacun des groupes $CHR^2$, ou bien forment, ensemble, un groupe aryle ou cycloalkyle substitué ou non substitué, X est un hydrogène ou un cation monovalent et chaque groupe $R^2$ est, individuellement, un groupe alkyle en $C_1$-$C_4$ ou un hydrogène; ou

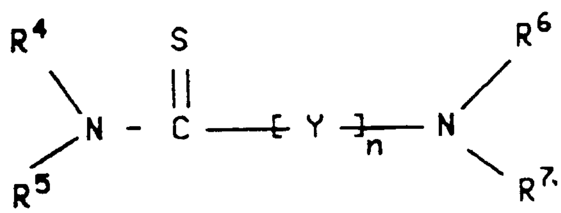 IV

dans laquelle $R^4$, $R^5$, $R^6$ et $R^7$ sont, individuellement, un hydrogène, un groupe alkyle en $C_1$-$C_{10}$ ou un groupe aryle, Y est un groupe

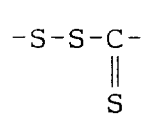

et n est 0 ou 1; ou

$(HS)_a$-$R^8$-$(OH)_b$ VII

dans laquelle $R^8$ est un radical alkylène polyvalent de 2-20 atomes de carbone et a et b sont des nombres entiers de 1-3, bornes comprises, la somme a + b ne dépassant pas 4.

**2.** Solution stabilisée selon la revendication 1, dans laquelle ledit composé est représenté par la formule:

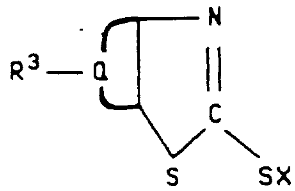

dans laquelle $R^3$ représente un atome d'hydrogène ou un radical hydrocarboné inférieur, X est tel que défini dans cette revendication et Q est un groupe aryle ou cycloalkyle.

**3.** Solution selon la revendication 1, dans laquelle le thiosulfate est le thiosulfate de sodium.

**4.** Solution stabilisée selon la revendication 1, dans laquelle ledit composé est représenté par la formule:

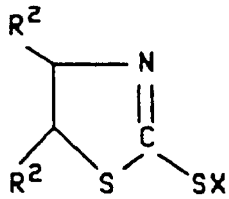

III

dans laquelle $R^2$ et X sont tels que définis dans cette revendication.

**5.** Solution stabilisée selon la revendication 1, dans laquelle ledit composé est représenté par la formule:

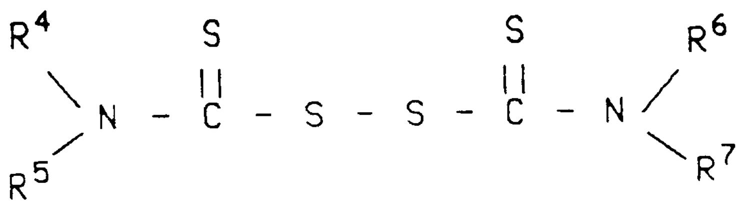

V

dans laquelle $R^4$, $R^5$, $R^6$ et $R^7$ sont tels que définis dans cette revendication.

**6.** Solution stabilisée selon la revendication 1, dans laquelle ledit composé est représenté par la formule:

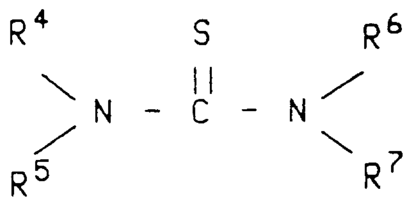

VI

dans laquelle $R^4$-$R^7$ sont tels que définis dans cette revendication.

7. Solution stabilisée selon la revendication 1, dans laquelle ledit composé est représenté par la formule:

$(HS)_a$-$R^8$-$(OH)_b$ VII

dans laquelle $R^8$, a et b sont tels que représentés dans cette revendication.

8. Procédé pour inhiber la décomposition d'une hydroxylamine ou d'une solution aqueuse d'un sel d'hydroxylamine au moins partiellement neutralisé, qui comprend l'addition à ladite solution d'une quantité stabilisante d'un thiosulfate hydrosoluble de métal alcalin, de métal alcalino-terreux ou d'ammonium ou d'un composé de formule:

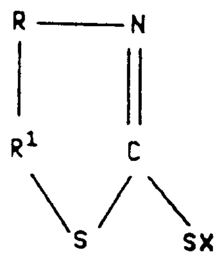

I

dans laquelle R et $R^1$ sont chacun des groupes $CHR^2$, ou bien forment, ensemble, un groupe aryle ou cycloalkyle substitué ou non substitué, X est un hydrogène ou un cation monovalent et chaque groupe $R^2$ est, individuellement, un groupe alkyle en $C_1$-$C_4$ ou un hydrogène; ou

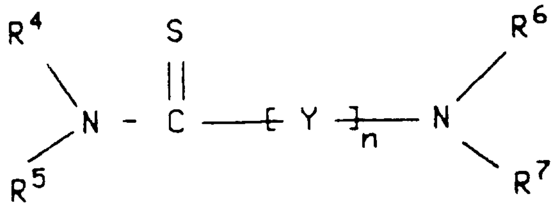

IV

dans laquelle $R^4$, $R^5$, $R^6$ et $R^7$ sont, individuellement, un hydrogène, un groupe alkyle en $C_1$-$C_{10}$ ou un groupe aryle, Y est un groupe

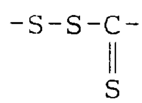

et n est 0 ou 1; ou

$(HS)_a$-$R^8$-$(OH)_b$ VII

dans laquelle $R^8$ est un radical alkylène polyvalent de 2-20 atomes de carbone et a et b sont des nombres entiers de 1-3, bornes comprises, la somme a+b ne dépassant pas 4.

9. Procédé selon la revendication 8, dans lequel le composé est représenté par la formule:

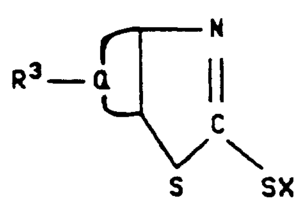

dans laquelle $R^3$ représente un atome d'hydrogène ou un radical hydrocarboné inférieur, X est tel que défini dans cette revendication et Q est un groupe aryle ou cycloalkyle.

**10.** Procédé selon la revendication 8, dans lequel ledit composé est représenté par la formule:

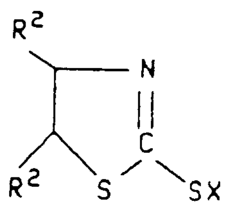

III

dans laquelle X et $R^2$ sont tels que représentés dans cette revendication.

**11.** Procédé selon la revendication 8, dans lequel ledit composé est représenté par la formule:

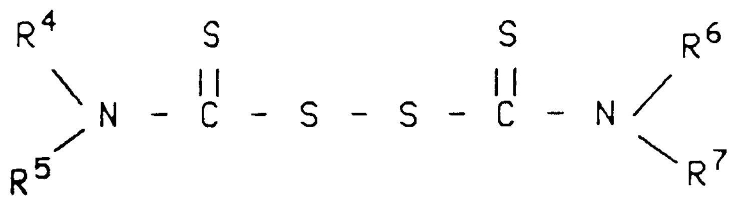

V

dans laquelle $R^4$, $R^5$, $R^6$ et $R^7$ sont tels que définis dans cette revendication.

**12.** Procédé selon la revendication 8, dans lequel ledit composé est représenté par la formule:

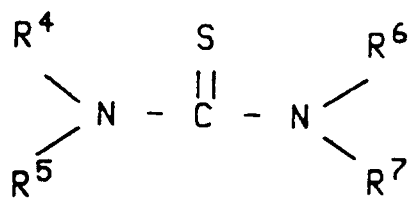

VI

dans laquelle $R^4$, $R^5$, $R^6$ et $R^7$ sont tels que définis dans cette revendication.

**13.** Procédé selon la revendication 8, dans lequel ledit composé est représenté par la formule:

$(HS)_a$-$R^8$-$(OH)_b$ VII

dans laquelle $R^8$, a et b sont tels que représentés dans cette revendication.

**14.** Procédé selon la revendication 8, dans lequel le thiosulfate est le thiosulfate de sodium.